# EUROPEAN PATENT APPLICATION

(11) **EP 4 112 921 A1**
(43) Date of publication of application: **04.01.2023**
(21) Application number: 21182779.5
(22) Date of filing: 30.06.2021
(51) Int. Cl.: F03D 1/06, F03D 80/30

(54) **CONDUCTOR ARRANGEMENT, WIND TURBINE BLADE AND WIND TURBINE**

(71) Applicant: Siemens Gamesa Renewable Energy A/S, 7330 Brande (DK)
(72) Inventor: Nielsen, Lars Holm, 8766 Noerre Snede (DK)
(74) Representative: SGRE-Association

(57) **Abstract**

Conductor arrangement for a lightning conductor circuit (24) of a wind turbine blade (2) comprising a conductor component (12) and an electrically conductive lightning receptor (13), wherein the conductor component (12) comprises a socket (14) for the lighting receptor (13) and two electrically conductive portions (15, 16), which are separated by an electrically insulating portion (17) of the conductor component (12), wherein the lightning receptor is insertable into the socket (14) and wherein the conductive portions (15, 16) are electrically connected to each other when the lightning receptor (13) is inserted.

## Description

The invention relates to a conductor arrangement for a lighting conductor circuit of a wind turbine blade comprising a conductor component and an electrically conductive lightning receptor. Furthermore, the invention relates to a wind turbine blade and a wind turbine.

The blades of wind turbines are normally equipped with lightning conductors to protect the wind turbine from lightning strikes, in particular to allow conducting a lightning current from the blade to the ground. Therefore, lightning conductors may be arranged inside the wind turbine blades, wherein at certain positions lightning receptors are arranged at the outer shell of the wind turbine blade to form exposed electrical contacts.

When a lightning strike hits one of the lightning receptors, the lightning current can be grounded via the lightning conductors in the interior of the blade, the nacelle and the tower of the wind turbine. The lightning receptors may be connected to electrically conductive counterparts in the lightning conductor circuit, which are arranged in the interior of the blade and/or embedded in the shell of the blade.

After installation of the wind turbine and/or during maintenance or repair procedures, a testing of the lightning conductor system of the wind turbine may be necessary, in particular to check the connectivity of the lightning conductor system and the electrical contacts between the lightning receptors, their respective counterparts and/or the lightning conductors in the interior of the blade.

The testing may be done for instance by technicians climbing on the outside of the wind turbine blade using a testing device connected via a cable to a root-side and of the lightning conductor to measure the connectivity, or the resistance, respectively, between the lightning receptors and the remainder of the lightning conductor system in the interior of the blade. However, this measurement requires that a technician can reach the lightning receptors on the outside of the blade so that the checking procedure is tedious and time-consuming. Furthermore, the testing procedure is limited to time windows with appropriate weather conditions that allows works on the outside of the blade. Therefore, a need for more efficient testing procedures of a lightning conductor system exists.

The invention is based on the objective problem to provide an improved conductor arrangement for a lightning conductor circuit of a wind turbine blade which facilitates connectivity testing.

According to the invention, this problem is solved by a conductor arrangement as initially described, wherein the conductor component comprises a socket for the lightning receptor and at least two electrically conductive portions, which are separated by at least one electrically insulating portion of the conductor component, wherein the lightning receptor is insertable into the socket and wherein the conductive portions are electrically connected to each other when the lightning receptor is inserted.

The conductor component, which forms the counterpart for the lightning receptor in the interior of a wind turbine blade, comprises a socket, in which the lightning receptor can be inserted. For example, the conductor component may be a block, or comprise a block-like or cuboid shape, respectively. The conductor component comprises at least two electrically conductive portions that are separated by at least one electrically insulating portion.

When the lightning conductor is not inserted into the socket or not correctly inserted into the socket, respectively, the two electrically conductive portions are electrically isolated from each other. When the electrically conductive lightning receptor is inserted into the socket, it connects the two electrically conductive portions of the conductor component so that an electrical connection is established. It is possible that the conductor component comprises more than two conductive portions which are electrically isolated from each other by one or more insulating portions, wherein a connection between the conductive portions is established by inserting the lightning receptor in the socket.

During fabrication of a wind turbine blade, the conductor components may be embedded into the wind turbine blade, in particular underneath and/or within a shell of the wind turbine blade. After casting of the wind turbine blade, the lightning receptor may be inserted into the socket of the conductor component creating an electrical contact at the outer surface of the wind turbine blade to the conductor component in the interior of the blade. The wind turbine blade may comprise a plurality of such conductor components, which are connected to each other, in particular in a series connection.

The conductor arrangement has the advantage that connectivity testing of a lightning conductor circuit comprising one or more of the conductor arrangements is facilitated since all electrical connections, including in particular the connections between the receptors and the conductor components, may be tested by checking the connectivity or the conductivity of the lightning conductor circuit.

The lightning conductor circuit may comprise for instance a plurality of conductor arrangements, which are connected in series by connecting two electrically conductive portions of two different conductor arrangements using a connection means, for instance a lightning cable. In this case, a connectivity between first end of the series connection and a second end of the series connections can only be measured if all lightning receptors are inserted correctly into the sockets and connecting the two electrically conductive portions of their respective conductor component counterpart. If an electrical connection between a lightning receptor and a conductor component and/or an electrical connection between two conductor components is not established, the lightning conductor circuit is interrupted and a connectivity or a significant conductance of the series connection cannot be measured.

Therefore, the conductor arrangement simplifies the testing procedure, since only one single measurement of the connectivity of the entire lightning conductor circuit is necessary. Advantageously, this reduces the time required for the testing of the lightning conductor circuit and therefore minimizes the downtime of the wind turbine and the work which has to be done outside on the blade with the associated weather risk.

Preferably, the socket is encompassed at least partly by the conductive portions or by the conductive portions and the insulating portion. By inserting the lightning receptor into the socket, the insulating portion is bridged by the lightning receptor so that the two conductive portions are electrically connected. The inserted lightning receptor is at least partly encompassed by the conductive portions, or by each of the conductive portions, respectively. Additionally, the socket may be encompassed at least partly by the insulating portion.

In a preferred embodiment, the inserted lightning receptor is in direct contact with each of the two conductive portions. An electrical connection may be created by inserting the lightning receptor into the socket and therefore bringing the lightning receptor into direct with both conductive portions. Since also the lightning receptor is electrically conductive, an electrical connection between the two conductive portions is created via the lightning receptor.

Preferably, the insulating portion is formed at least partly by a gap between the conductive portions and/or the insulating portion is formed at least partly by an insulating material, in particular a polymer, glass fibers, wood and/or a ceramic material. The insulating portion may be a gap which is bridged by the inserted lightning receptor. The insulating portion may also be formed from an insulating material like a polymer material, glass fibers, wood and/or a ceramic material. The insulating portion may also be formed partly by a gap and partly by an insulating material.

The gap and/or the insulating material are in particular arranged in between the conductive portions so that they are electrically isolated from each other. In particular, the conductive portions may be in direct contact with the gap and/or the insulating material forming the insulating portion so that a compact structure, in particular a cuboid structure or block shape, of the conductor component may be obtained.

Preferably, the conductive portions are arranged on an electrically insulating carrier element. The electrically insulating carrier element may be for instance an electrically insulating plate, on which the two conductive portions are mounted. It is also possible that the insulating element is a frame or a cage which encompasses the insulating portion and the conductive portions for fixating them relatively to each other.

The insulating portion separating the two conductive portions may be provided as a gap or as an insulating material. The carrier element may consist of the same insulating material like the insulating portion so that the carrier element and the insulating portion may be manufactured in one piece or for example with a T-shaped cross-section separating the two conductive portions. By providing the electrically insulating carrier element, a relative orientation between the two conductive portions may be maintained, for instance during a casting process of the wind turbine blade and/or during insertion of the lightning receptor into the socket.

In a preferred embodiment of the invention, the conductive portions of the conductor component consist of metal, in particular of stainless steel, aluminum, and/or copper. Each of the conductive portions may be for instance a cuboid portion, or a block, respectively so that the conductor component comprises two separated, electrically conductive blocks.

In a preferred embodiment, the socket comprises at least one hole, in particular a threaded hole, and the lightning receptor is cylindrically shaped and comprises in particular a thread or a threaded section. A cylindrically shaped lightning receptor may be inserted into the hole connecting for instance two conductive portions, which each surround the hole partly, so that an electrical connection is created by the inserted lightning receptor.

The cylindrically shaped lightning receptor may be pressed into the hole so that the lightning receptor may be fixed in the socket. It is also possible that the socket comprises one or more threaded holes and that the lightning receptor comprises a thread or a threaded section so that the lightning receptor may be screwed into the socket for fixation and for electrically connecting the two conductive portions.

Preferably, one of the conductive portions comprises a tip-shaped section for forming a tip receptor of a wind turbine blade. A conductor component comprising a conductive portion with a tip-shaped section may be arranged in the tip section of a wind turbine blade so that the tip-shaped section of the conductor component protrudes from the tip of the wind turbine blade, or forms the tip of the wind turbine blade, respectively. The tip-shaped section of the conductive portion may then act as a tip receptor of the wind turbine blade. This further facilitates a connectivity testing, since such a tip receptor may be directly accessed from the outside of the wind turbine blade. Therefore, an electrical resistance between the tip receptor and a contact at the root-side end of the lightning conductor circuit may be measured for testing the connectivity of the entire lightning conductor circuit.

The wind turbine blade according to the invention comprises at least one conductor arrangement according to the invention.

The conductor component of the conductor arrangement may be embedded in the wind turbine blade, for instance in the laminate structure forming the shell of the wind turbine blade. The lightning receptor is insertable or inserted into the conductor component, wherein the inserted lightning receptor is at least partly exposed at the outer surface of the wind turbine blade to form a receptor for collecting lightning strikes which hit the wind turbine blade. For instance, a portion of the inserted lightning receptor may protrude from the outer surface of the blade.

Preferably, the wind turbine blade comprises a plurality of conductor arrangements, wherein the conductor components of the conductor arrangements are connected in series by one or more connection means. The connection means may be for instance a cable which connects two conductive portions of two different conductor components. The plurality of conductor components can therefore be connected in series by providing connection means connecting each two or more conductive portions of two different conductor elements. Advantageously, also the lightning receptors are parts of the series connection so that all connections within the lightning conductor system may be checked in a single measurement.

In a preferred embodiment, the series connection of the conductor components is connected to a tip receptor, or a conductor component of the series connection comprises a tip-shaped section forming a tip receptor of the blade. The tip receptor may be a first end of the series connection. A second end of the series connection of a plurality of conductor components may be arranged at the root-side end of the wind turbine blade so that the lightning conductor circuit spans at least essentially over the entire spanwise length of the wind turbine blade.

Preferably, one end, in particular a tip-side end, of the series connection of the conductor arrangement is connected to a down conductor of the wind turbine blade. By providing a down conductor, which is for instance attached to a tip receptor and/or to the conductive portion of a conductor component closest to the tip of the blade, the measurement of the connectivity of the lightning conductor circuit may be further facilitated. In this case, the connectivity between a root-side end of the down conductor connected to the tip-side end of the series connection of the conductor arrangement and the root-side end of the series connection may be measured so that both points required for the conductivity measurement are located at the root-side end of the blade. This avoids that an electrical contact to the outside of the wind turbine blade, for instance in the tip region of the blade or on the outer shell of the blade, has to be established. Providing the down conductor is optional, since also without down conductor, the measurement is significantly facilitated as only the tip receptor has to be contacted for testing the connectivity of the lightning conductor circuit.

Advantageously, the conductivity measurement of the lightning conductor circuit may be conducted from the inside of the wind turbine blade, in particular at the root-side portion of the wind turbine blade, or in the hub bearing the wind turbine blades, respectively.

A wind turbine according to the invention comprises at least one wind turbine blade according to the invention.

All details and advantages described in relation with the conductor arrangement according to the invention apply also to the wind turbine blade according to the invention and the wind turbine according to the invention and vice versa. The details and advantages described in relation with the wind turbine blade according to the invention apply correspondingly to a conductor arrangement according to the invention as well as to the wind turbine according to the invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an embodiment of a wind turbine according to the invention,
- Fig. 2: a first embodiment of a wind turbine blade according to the invention,
- Fig. 3: a schematic of a lightning conductor circuit of a second embodiment of a wind turbine blade according to the invention,
- Fig. 4: a side view of the lightning conductor circuit of the second embodiment of the wind turbine blade according to the invention,
- Fig. 5: a first embodiment of a conductor arrangement according to the invention,
- Fig. 6: a second embodiment of a conductor arrangement according to the invention, and
- `Fig. 7: a third embodiment of a conductor arrangement according to the invention.

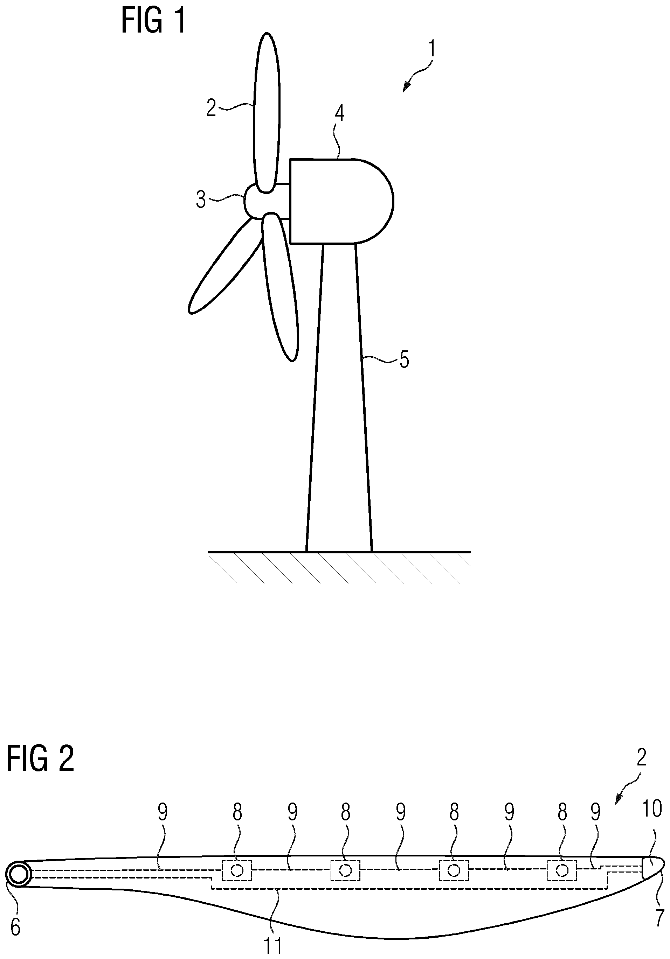

In fig. 1, an embodiment of a wind turbine 1 is shown. The wind turbine 1 comprises three rotor blades 2, which are attached to a hub 3 of the wind turbine 1. The hub 3 is mounted on the front side of a nacelle 4 of the wind turbine, wherein the nacelle 4 is supported by a tower 5 of the wind turbine 1.

In fig. 2, a first embodiment of a wind turbine blade 2 is shown. The wind turbine blade 2 comprises a root-side end 6 and a tip 7. To protect the wind turbine blade 2 from lightning strikes, the wind turbine blade 2 comprises a plurality of conductor arrangements 8, which are connected in series by connection means 9. The conductor arrangement 8 and the connection means 9 are part of a lightning conductor circuit 24 of the wind turbine blade 2.

The lightning conductor circuit 24 further comprises a tip receptor 10, which is connected to one of the conductor arrangements 8 by one of the connection means 9. Furthermore, the wind turbine blade 2 comprises a down conductor 11, which is connected to the tip receptor 7. The plurality of conductor arrangements 8, the plurality of connection means 9, as well as the tip receptor 10 and the down conductor 11 form a series connection. Both ends of the series connection can be contacted from the root-side end 6 of the wind turbine blade 2 to measure an electrical connectivity, or an electrical resistance, respectively, of the series connection. The structure of the conductor arrangements 8 is described in more detail in relation to the following figures.

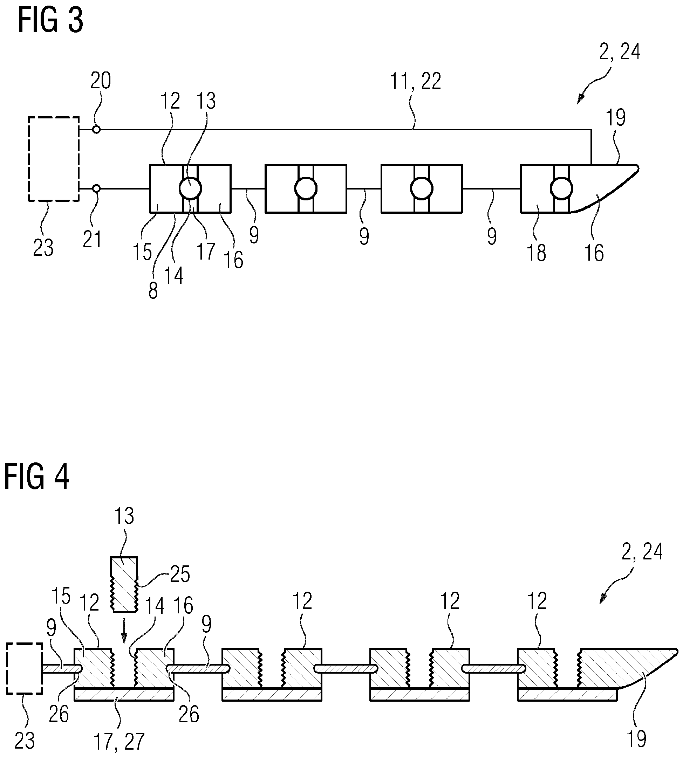

In fig. 3, a schematic of the lightning conductor circuit 24 of a second embodiment of a wind turbine blade 2 is shown. Each of the conductor arrangements 8 comprises a conductor component 12 and an electrically conductive lightning receptor 13. The conductor component 12 comprises a socket 14 for accommodating the lightning receptor 13. Furthermore, the conductor component 12 comprises two electrically conductive portions 15, 16 which are separated by an electrically insulating portion 17 of the conductor component 12.

The lightning receptor 13 is insertable into the socket 14, wherein the conductive portions 15, 16 of the conductor component 12 are electrically connected when the lightning receptor 13 is inserted into the socket 14. When the lightning receptor 13 is not inserted into the socket 14, the electrically conductive portions 15, 16 are separated by the electrical insulating portion 17.

The conductor arrangements 8 enable to check in one single conductivity measurement the correct connection between all connection means 9 and the conductive portions 15, 16 of the conductor components 12 as well as the electrical connections between the lightning receptors 13 and their corresponding conductor components 12. The conductor components 12 may be provided as blocks or the like within a laminate structure forming a shell of the wind turbine blade 2. The lightning receptors 13 may be partly exposed at the outer surface and/or protrude the outer surface to provide electrodes for the reception of lightning strikes on the outer surface of the wind turbine blade 2.

One of the conductor arrangements 18 is located at the tip 7 of the wind turbine blade 2. The conductive portion 16 of the conductor component 12 of the conductor arrangement 18 comprises a tip-shaped section 19 for forming a tip receptor 10 of the wind turbine blade 2. As an alternative, it is possible that a separate tip receptor 10 is connected to a conductive portion 16 of the conductor arrangement 18, which is fully embedded in the interior of the wind turbine blade 2, as it is depicted in fig. 2.

The conductive portion 16 of the conductor arrangement 18 may be connected to the down conductor 11 so that the connectivity measurement may be conducted at the contacts 20, 21 which may be located in particular at the root-side end 6 of the wind turbine blade 2. As an alternative, the down conductor 11 may be omitted so that the connectivity measurement may be conducted using contact 21 and a measuring means connected to the conductive portion 16 of the conductor arrangement 18, or to the tip receptor 10, respectively, on the outside of the wind turbine blade 2.

The measuring means may be for instance a cable 22, which connects the conductive portion 16 of the conductor arrangement 18 to a measurement device 23. The measurement device 23 may be an external device or it may be integrated in the wind turbine blade 2. In case of the usage of a down conductor 11, the measurement device 23 may be connected to the down conductor 11 instead of the measuring means.

The measurement device 23 may be adapted to perform a connectivity measurement of the lightning conductor circuit 24 formed by the plurality of conductor arrangement 8, the plurality of connection means 9 and the down conductor 11, if provided. The measurement device 23 may apply for instance a high volt DC voltage, for instance a 1000 Volt DC voltage, and measure a current, a resistance and/or a conductance of the series connection of the components of the lightning conductor circuit.

In addition or as an alternative, the measurement device 23 may comprise a time-domain reflectometer, which is adapted to inject a wave into the lightning conductor circuit 24 and measure the waves reflected from the interfaces between the components of the lightning conductor circuit 24. This allows for testing if all connections are intact and furthermore for collecting information regarding the quality of the individual connections within the lightning conductor circuit 24.

In fig. 4, a side view of the lightning conductor circuit 24 is shown. The conductor components 12 are shown in a cut view depicting the socket 14. The socket 14 is a threaded hole, into which the receptor 13 may be screwed. The receptor 13 has a cylindrical shape and a threaded section 25 for engaging into the threaded hole used as socket 14. As could be seen from the top view in fig. 3, an electrical connection between the electrically conductive portions 15, 16 bridging the insulating portion 17 is only established when the receptor 13 is inserted, or screwed, respectively, into the socket 14.

The conductive portions 15, 16 may comprise connection portions 26 to connect the conductor arrangement 8 or the conductor component 12, respectively, to the connection means 9. The connection means 9 may be for instance electrical cables suitable for the conduction of a lightning current, which may be attached to the conductive portion 15, 16 using the connection portions 26.

The conductive portions 15, 16 are separated by the electrically insulating portion 17 of the conductor component 12. The conductive portions 15, 16 may be arranged on an electrically insulating carrier element 27. The insulating carrier element 27 may be a separate component, to which the conductive portions 15, 16 are attached. The insulating portion 17 may be for instance a gap which electrically insulates the portions 15, 16 from each other. It is also possible that the insulating portion 17 is formed by an electrically insulating material or by combination of at least one gap and at least one electrically insulating material, respectively.

It is possible that the insulating portion 17 and the insulating carrier element 27 are provided by the same electrically insulating material and/or as a one-piece element. The carrier element 27 may be provided as a plate, to which the conductive portions 15, 16 are mounted. It is possible that the electrically insulating carrier element 27 is a cage or a box encompassing the conductive portions 15, 16 and fixating them relatively to each other, so that the receptor 13 may be inserted into the socket 14 for electrically connecting the electrically conductive portions 15, 16 and for ensuring that the lightning receptor 13 is in direct contact with both electrically conductive portions 15, 16.

It is possible that a measurement device 23 is connected for example to the root side end of the lightning conductor circuit 24 to enable a connectivity measurement of the lightning conductor circuit 24. In this embodiment, the measurement device 23 may be connected in series to the lightning conductor circuit 24 or it may be connected in parallel to one of the connection means 9, preferably at the root-side end of the lightning conductor circuit 24.

The measurement device may measure a voltage of the lightning conductor circuit 24 and/or a current in the lightning conductor circuit 24, which may be induced by an electrical field in the sky, or a potential difference along the lightning conductor circuit 24, respectively. For example, such an atmospheric electrical field can exhibit a field strength between approximately 100 V/m and 100 kV/m depending on the weather conditions and therefore cause a measurable current and/or voltage in the lightning conductor circuit 24. This measurement procedure may also be used in combination with a down conductor 11 as described in relation to fig. 3.

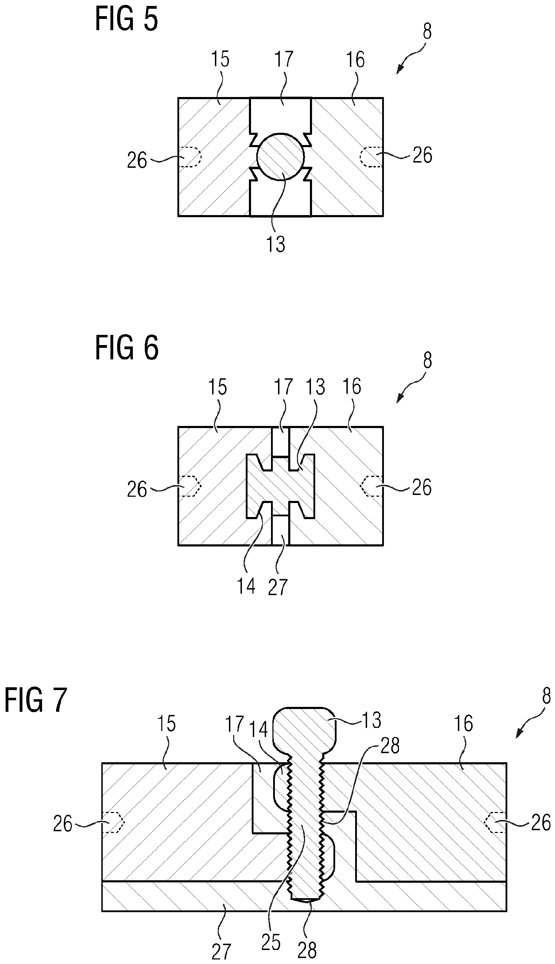

In fig. 5, a first embodiment of a conductor arrangement 8 is depicted. In this embodiment, the electrically insulating portion 17 is provided by an electrically insulating material. The electrically insulating material may be for instance a polymer material, wood, a ceramic material or a combination of the aforementioned materials.

The socket 14 is encompassed partly by the conductive portions 15, 16 and the insulating portion 17. When inserted into the socket 14, the lightning receptor 13 is in direct contact with each of the two conductive portions 15, 16 creating an electrical connection between the conductive portions 15, 16.

In fig. 6, a second embodiment of a conductor arrangement 8 is shown. In this embodiment, the lightning receptor 13 comprises two dovetail sections which engage in a correspondingly shaped socket of the conductor component 12. The electrically insulating portion 17 is formed as a gap, where the electrically conductive portions 15, 16 are attached to an electrically insulating carrier element 27 as previously described. When the lightning receptor 13 is inserted into the socket 14, the lightning receptor 13 comes into direct contact with both electrically conductive portions 15, 16 for establishing the electrical connection.

In fig. 7, a third embodiment of a conductor arrangement 8 is shown. In this embodiment, the socket 14 comprises two threaded holes, which are each encompassed entirely by one of the conductive portions 15, 16. The lightning receptor 13 comprises a threaded portion 25 as previously described and may be screwed into the socket 14 electrically connecting the electrically conductive portions 15, 16. In this embodiment, the electrically insulating portion 17 is provided by an electrically insulating material and is formed in one piece with the electrically insulating carrier element 27. The electrically insulating material may be for instance a polymer material, wood, a ceramic material or a combination of these materials. The socket 14 is partly encompassed also by the electrically insulating material, wherein the electrically insulating portion 17 comprises two threaded holes 28, in which the receptor 13 engages during insertion.

The aforementioned embodiments of the conductor arrangement 8 may be used as parts of the aforementioned lightning conductor circuit 24, wherein one or more embodiments of the conductor arrangements 8 may be used in one lightning conductor circuit 24.

In all embodiments, connection portions 26 for connecting the conductor component 12 to connection means 9 may be provided in the electrically conductive sections 15, 16. To enable a conduction of lightning currents, the conductor components 12 of all embodiments may have a cuboid shape with edge lengths between 1 cm and 20 cm, in particular between 5 cm and 15 cm, so that a suitable cross-sectional area for conducting a lightning current may be obtained. Also other shapes than cuboid shapes of the conductor components 12 are possible. Furthermore, the conductor components may also comprise more than one insulating portion 17 and/or more than two conductive portions 15, 16, which are connectable by inserting the receptor 13 in the socket 14.

The lightning receptor 13 may have a cylindrical shape with a length between 5 cm and 25 cm, in particular between 5 cm and 15 cm, and a diameter in between 1 cm and 10 cm, in particular between 3 cm and 4 cm. In all embodiments, the conductive portions 15, 16 and the receptor 13 of the conductor arrangement 8 may be made of a metal, for instance copper, aluminum or stainless steel.

Although the present invention has been described in detail with reference to the preferred embodiment, the present invention is not limited by the disclosed examples from which the skilled person is able to derive other variations without departing from the scope of the invention.

## Claims

1. Conductor arrangement for a lightning conductor circuit (24) of a wind turbine blade (2) comprising a conductor component (12) and an electrically conductive lightning receptor (13), wherein the conductor component (12) comprises a socket (14) for the lighting receptor (13) and at least two electrically conductive portions (15, 16), which are separated by at least one electrically insulating portion (17) of the conductor component (12), wherein the lightning receptor is insertable into the socket (14) and wherein the conductive portions (15, 16) are electrically connected to each other when the lightning receptor (13) is inserted.

2. Conductor arrangement according to claim 1, **characterized in that** the socket (14) is encompassed at least partly by the conductive portions (15, 16) or by the conductive portions (15, 16) and the insulating portion (17).

3. Conductor arrangement according to claim 1 or 2, **characterized in that** the inserted lightning receptor (13) is in direct contact with each of the two conductive portions (15, 16) .

4. Conductor arrangement according to one of the preceding claims, **characterized in that** the insulating portion (17) is formed at least partly by a gap between the conductive portions (15, 16) and/or that the insulating portion (17) is formed at least partly by an insulating material, in particular a polymer, glass fibers wood and/or a ceramic material.

5. Conductor arrangement according to one of the preceding claims, **characterized in that** the conductive portions (15, 16) are arranged on an electrically insulating carrier element (27).

6. Conductor arrangement according to one of the preceding claims, **characterized in that** the conductive portions (15, 16) of the conductor component (12) consist of metal, in particular of stainless steel, aluminum, and/or copper.

7. Conductor arrangement according to one of the preceding claims, **characterized in that** the socket (14) comprises at least one hole, in particular a threaded hole (28), and that the lightning receptor is cylindrically shaped and comprises in particular a thread or a threaded section (25).

8. Conductor arrangement according to one of the preceding claims, **characterized in that** one of the conductive portions (15, 16) comprises a tip-shaped section (19) for forming a tip receptor (10) of a wind turbine blade (2).

9. Wind turbine blade comprising at least one conductor arrangement (8) according to one of the preceding claims.

10. Wind turbine blade according to claim 9, **characterized in that** the wind turbine blade comprises a plurality of conductor arrangements (8), wherein the conductor components (12) of the conductor arrangements (8) are connected in series by one or more connection means (9).

11. Wind turbine blade according to claim 10, **characterized in that** the series connection of the conductor components (12) is connected to a tip receptor (10) or that a conductor component (12) of the series connection comprises a tip-shaped section (19) forming a tip receptor (10) of the blade (2) .

12. Wind turbine blade according to claim 10 or 11, **characterized in that** one end, in particular a tip-side end, of the series connection of conductor arrangements (8) is connected to a down conductor (11) of the wind turbine blade.

13. Wind turbine comprising at least one wind turbine blade (2) according to one of the claims 9 to 12.
